# EUROPÄISCHE PATENTSCHRIFT

(11) **EP 0 806 246 B1**
(45) Veröffentlichungstag und Bekanntmachung des Hinweises auf die Patenterteilung: **13.06.2001**
(21) Anmeldenummer: 97810228.3
(22) Anmeldetag: 16.04.1997
(51) Int. Cl.: B05B 1/30, F16K 23/00, F23D 11/38, F23D 11/26

(54) **Düsenabschlussventil sowie Druckzerstäuberdüse mit einem solchen Düsenabschlussventil**
Nozzle shut off valve and pressure spray nozzle with such a valve
Vanne d'arrêt pour buse et buse de pulvérisation par pression munie d'une telle vanne

(30) Priorität: 03.05.1996 CH 113996
(43) Veröffentlichungstag der Anmeldung: 12.11.1997
(73) Patentinhaber: SATRONIC AG, 8157 Dielsdorf (CH)
(72) Erfinder: Caminada, Marcel, 8172 Niederglatt (CH)
(74) Vertreter: Hug Interlizenz AG

(56) Entgegenhaltungen:
- EP-A- 0 291 991
- DE-A- 3 308 153
- FR-A- 1 577 740
- US-A- 3 863 841
- US-A- 3 948 285

## Beschreibung

### TECHNISCHES GEBIET

Die vorliegende Erfindung bezieht sich auf das Gebiet der Verbrennungstechnik. Sie betrifft ein Düsenabschlussventil gemäss dem Oberbegriff des Anspruchs 1.

Sie betrifft weiterhin eine Druckzerstäuberdüse gemäss dem Oberbegriff des Anspruchs 9.

Eine solches Düsenabschlussventil und eine solche Druckzerstäuberdüse sind beispielsweise aus der Druckschrift FR-A-1 577 740 bzw. der DE-A1-33 08 153 der Anmelderin bekannt.

### STAND DER TECHNIK

Bei ölbetriebenen Heizungsanlagen, bei denen das zu verbrennende Heizoel unter einem Druck von mehreren (etwa 5) bar durch eine Druckzerstäuberdüse in den Brennerraum eingespritzt und dabei zerstäubt wird, kann es, wenn keine besonderen Vorkehrungen getroffen werden, beim Abschalten des Brenners zu einem strahlartigen Austreten oder Nachtröpfeln von Oel aus der Druckzerstäuberdüse kommen. Ein derartiges Nachtröpfeln führt in der Abstellphase und in der anschliessenden Startphase zu einem Ueberschuss an Heizoel im Brennraum, der sich in Form von unverbrannten Kohlenwasserstoffen im Abgas bemerkbar macht und die Emissionswerte der Heizanlage erheblich verschlechtert. Dieselben unerwünschten Auswirkungen ergeben sich, wenn infolge einer Erwärmung des in der Zuleitung zur Düse stehenden Oeles eine Volumenausdehnung erfolgt, die zu einem Druckaufbau in der Leitung und zu einer Abgabe von Oel aus der Düsenöffnung führt.

Es ist daher in der eingangs genannten Druckschrift bereits vorgeschlagen worden, die Druckzerstäuberdüse einer Heizungsanlage mit einem selbsttätig umschaltbaren Absperrventil auszurüsten. Ein solches Absperrventil, welches mit einer federnd vorgespannten Kugel als Absperrorgan arbeitet und direkt in die Düse eingesetzt ist, verschliesst bei starkem Druckabfall, wie er beim Abschalten auftritt, in der Oelzufuhrleitung den Oelfluss direkt an der Düse, so dass die in der Zuleitung zwischen dem Magnetventil und der Düse vorhandenen Oelvolumina nach dem Abschalten nicht mehr aus der Düse austreten können.

Bei dem bekannten Absperrventil wird die Ventilkugel, die direkt auf einem metallischen Ventilsitz aufliegt, durch eine membranartige Springfeder vorgespannt, die zwischen zwei Endlagen hin- und herspringen kann und damit eine extrem nichtlineare Kennlinie aufweist. Durch den Einsatz der Springfeder wird erreicht, dass das Ventil beispielsweise bei einem Oeffnungsdruck von 7-9 bar öffnet, aber erst bei einem Schliessdruck von üblicherweise 4 bar wieder schliesst. Diese Hysterese im Ventilverhalten hat den Vorteil, dass, wenn der Oeffnungsdruck beim Anfahren der Oelpumpe einmal kurzzeitig erreicht wird und das Ventil öffnet, anschliessend bei einem wesentlich niedrigeren Arbeitsdruck eingedüst werden kann, so dass die Oelpumpe leistungsmässig wesentlich günstiger ausgelegt werden kann.

Problematisch ist bei dem bekannten Ventil jedoch, dass in der Praxis ein Springfeder mit einer genau vorgegebenen Springcharakteristik nur sehr schwer herzustellen ist, zumal die Feder nur einen Durchmesser von wenigen Millimetern aufweist. Darüber hinaus lässt sich durch das Zusammenwirken der metallischen Ventilkugel mit dem metallischen Ventilsitz nur schwer eine ausreichende Dichtigkeit des Ventils erreichen.

Es ist andererseits bei einer Druckluft-Oelzerstäuberdüse ein in der Düse angeordnetes Ventil vorgeschlagen worden, bei welchem als Absperrorgan eine Membran eingesetzt wird, die von einer (linearen) Spiralfeder vorgespannt wird (EP-A1-0 566 855). Die Spiralfeder ist in einem Federraum untergebracht, der zwar auf der einen Seite durch die Membran abgedichtet wird, auf der anderen Seite jedoch durch eine Entlastungsöffnung mit der Düsenöffnung in Verbindung steht. Damit kann während des Betriebes grundsätzlich Oel in den Federraum eindringen und - da der Federraum hinter dem Ventil angeordnet ist - nach dem Abschalten aus der Düse austreten. Tatsächlich dringt in der Praxis nur wenig Oel in den Federraum ein. Dies hängt aber damit zusammen, dass bei der Druckluft-Oelzerstäuberdüse der EP-A1-0 566 855 - anders als der bei der ohne Druckluft arbeitenden Druckzerstäuberdüse der DE-A1-33 08 153 - durch die Druckluft eine Sogwirkung im Bereich der Düsenöffnung erzeugt wird, die eventuell in den Federraum eintretendes Oel sofort absaugt.

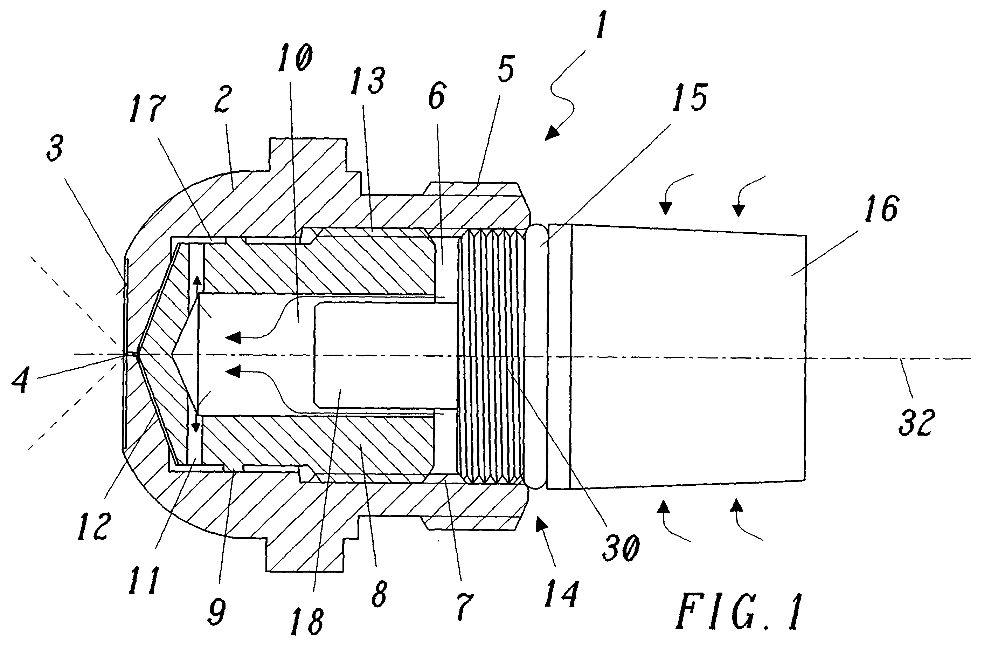

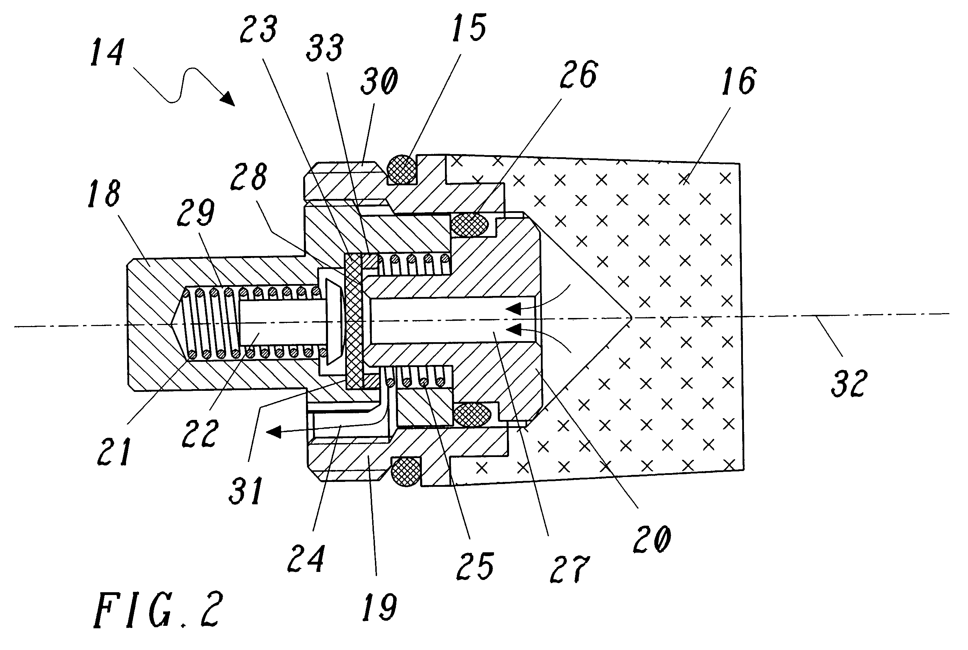

Zur Lösung dieser Probleme hat die Anmelderin in einer älteren, nicht vorveröffentlichten Anmeldung, nämlich der Europäischen Patentanmeldung Nr. 96810122.0, bereits eine Druckzerstäuberdüse mit einem Düsenabschlussventil vorgeschlagen, wie sie in den Fig. 1 und 2 in Ausführungsbeispielen dargestellt sind. Die vorangemeldet Druckzerstäuberdüse 1 gemäss Fig. 1 besteht im wesentlichen aus einem Düsengehäuse 2 mit einem sacklochartigen Innenraum 6. Das Düsengehäuse 2 ist auf der Austrittsseite abgeflacht mit einer Düsenfläche 3, in deren Mitte sich eine Düsenbohrung 4 befindet. Die Düsenbohrung, aus der das Oel mit einem Druck von mehreren bar austritt, verbindet den Innenraum 6 der Düse mit dem Aussenraum. In den Innenraum ist ein zylindrischer Kegeleinsatz 8 eingesetzt, der mit seiner kegelförmigen Spitze an den hohlkegelförmigen Boden des Innenraums 6 angepasst ist. Unterhalb der kegelförmigen Spitze ist der Kegeleinsatz 8 im Aussendurchmesser reduziert bis auf einen schmalen, ringförmig umlaufenden Wulst 9, der im Aussendurchmesser dem Innendurchmesser des Innenraums 6 angepasst ist und die Funktion einer Art von Filter übernimmt, um zu verhindern, dass Späne zur Düsenöffnung gelangen. Aufgrund des reduzierten Durchmessers bildet sich zwischen dem Kegeleinsatz 8 und der Wand des Innenraums 6 im Vorderteil der Düse ein ringförmiger Ueberströmraum 17, der über Drallnute 12, die auf der Kegelspitze des Kegeleinsatzes 8 eingearbeitet sind, mit der Düsenbohrung in Verbindung steht.

Der Kegeleinsatz 8 weist im Inneren ein Sackloch 10 auf, welches vom hinteren (rechten) Ende ausgehend bis in den Bereich der Kegelspitze reicht und durch einen oder mehrere Auslasskanäle 11 mit dem Ueberströmraum 17 verbunden ist. Der Kegeleinsatz 8 trägt am hinteren (rechten) Ende ein Aussengewinde 13, mittels dessen er in ein entsprechendes Innengewinde 7 im Innenraum 6 eingeschraubt werden kann. In Strömungsrichtung vor dem Kegeleinsatz ist ein Düsenabschlussventil 14 angeordnet. Das in der Seitenansicht gezeigte Düsenabschlussventil 14 ist mittels eines Aussengewindes 30 ebenfalls in das Düsengehäuse 2 eingeschraubt und gegen das Gehäuse mit einem O-Ring 15 abgedichtet. Das Düsenabschlussventil 14 ist eingangsseitig mit einem Filter 16 verbunden, welches vorzugsweise aus Sintermetall besteht. Das Düsenabschlussventil 14 ragt mit einem zapfenartigen Fortsatz in das Sackloch 10 des Kegeleinsatzes 8 hinein. Die Druckzerstäuberdüse 1 mit dem eingeschraubten Düsenabschlussventil 14 lässt sich ihrerseits mittels eines Aussengewindes 5 in einen (nicht dargestellten) Oelvorwärmer oder dgl. einschrauben.

Im Betrieb wird das Oel, welches auf der rechten Seite durch den Filter 16 in das Düsenabschlussventil 14 eintritt, bei geöffnetem Ventil im Bereich hinter dem Einschraubgewinde aus einem in Fig. 1 nicht dargestellten Auslass (24 in Fig. 2) in den Innenraum 6 gelassen. Es strömt von dort in Richtung der eingezeichneten Pfeile durch die Auslasskanäle 11 in den Ueberströmraum 17 und von dort über die Drallnuten 12 in die Düsenbohrung 4, von wo es in Form eines Zerstäubungskegels (strichliert angedeutet) in den Aussenraum (Brennraum) austritt.

Der innere Aufbau des Düsenabschlussventils 14 aus Fig. 1 ist im Längsschnitt in Fig. 2 wiedergegeben: Das Düsenabschlussventil 14 ist aus im wesentlichen rotationssymmetrischen und zu einer Ventilachse 32 konzentrisch angeordneten Einzelelementen 16, 18, 19, 20, 22, 23 zusammengesetzt. Die Einzelelemente umfassen u.a. ein zylinderringförmiges Ventilgehäuse 19, welches auf der einen Seite durch das fest aufgesetzte Filter 16 abgeschlossen ist. In das Ventilgehäuse 19 ist ein Innenteil 20 eingesetzt, welches einen Einlasskanal 27 in Form einer konzentrischen Durchgangsbohrung enthält. Das Innenteil 20 stützt sich eingangsseitig am Filter 16 ab und ist ausgangsseitig mit einem Ventilsitz 28 ausgestattet, welcher den Ausgang des Einlasskanals 27 ringförmig umgibt. In das Ventilgehäuse 19 ist weiterhin eine Ventilschraube 18 eingeschraubt, welche einen Federraum 29, einen daran anschliessenden Membransitz 31 und einen seitlich vor dem Membransitz 31 abgehenden Auslass 24 enthält und im eingeschraubten Zustand das Innenteil 20 im Ventilgehäuse 19 fixiert. Das Ventilgehäuse 19 weist - wie bereits oben erwähnt - ein Aussengewinde 30 auf, mit welchem es in die Druckzerstäuberdüse 1 eingeschraubt werden kann.

Das Absperrorgan des Düsenabschlussventils 14 ist als Membran 23 ausgebildet. Die (elastische) Membran 23, die in den Membransitz 31 eingelegt ist, wird mittels einer hinter der Membran 23 angeordneten ersten Feder 21 dichtend auf den Ventilsitz 28 gedrückt. Sie hebt gegen die Kraft der ersten Feder 21 nur vom Ventilsitz 28 ab, wenn ein vorbestimmter Druck, der Oeffnungsdruck, im Einlasskanal 27 erreicht wird. Die erste Feder 21 ist vorzugsweise als Spiralfeder ausgebildet. Sie besitzt eine im wesentlichen lineare Federcharakteristik. Sie wirkt auf einen Druckbolzen 22 ein, welcher seinerseits mit einer konvex geformten Stirnseite auf die Membran 23 Druck ausübt.

Die erste Feder 21 ist in dem Federraum 29 untergebracht. Der Federraum 29 ist als einseitig offener Raum (Sackloch) ausgebildet, dessen einzige Oeffnung durch die Membran 23 dichtend verschlossen wird. Der Federraum 29 enthält ein kompressibles Medium, das beim Oeffnen des Ventils durch die sich verformende Membran 23 leicht komprimiert werden kann. Aufgrund seiner Abgeschlossenheit kann während des Betriebes in ihn kein Oel eindringen, so dass er im Hinblick auf das Nachtropfen kein schädliches Volumen darstellt. Die Membran 23 liegt mit ihrem rückseitigen Randbereich auf dem Membransitz auf und wird mittels einer zweiten Feder 25, vorzugsweise ebenfalls einer Spiralfeder, gegen den Membransitz 31 gepresst. Hierdurch ist gewährleistet, dass die Membran 23 stets dichtend auf dem Membransitz 31 aufliegt. Die zweite Feder 25 ist in einem ringförmigen Hohlraum untergebracht, der zwischen dem vorderen (linken) Teil des Innenteils 20 und dem hinteren (rechten) Teil der Ventilschraube 18 gebildet wird.

In Strömungsrichtung vor der Membran 23 führt seitlich ein Auslass 24 aus der Ventilschraube 18 und nach vorne aus dem Ventilgehäuse 19 heraus. Das Innenteil 20 ist gegen das Ventilgehäuse 19 mit einem weiteren O-Ring 26 abgedichtet. Das Oel tritt, von der rechten Seite kommend, durch den Filter 16 in den Einlasskanal 27 ein und drückt von dort auf die Membran 23, und zwar auf einer Fläche, die von dem Ventilsitz 28 berandet wird. Mit steigendem Druck biegt sich die Membran 23 nach links durch und drückt den Druckbolzen nach links und die erste Feder 21 zusammen. Ist der Oeffnungsdruck, z.B. 5-7 bar, erreicht, hebt die Membran 23 vom Ventilsitz 28 ab, so dass das Oel den Raum der zweiten Feder 25 erfüllen kann. Das Oel drückt nun auf einer grösseren Fläche, die von dem Membransitz 31 berandet wird, auf die Membran, so dass ein geringerer Druck ausreicht, um dieselbe Federkraft der ersten Feder 21 zu kompensieren. Damit ist der Oeldruck, welcher das Düsenabschlussventil 14 offen hält, deutlich geringer als der Oeffnungsdruck. Das Oel strömt bei abgehobener Membran 23 dann aus dem Auslass 24 in den Innenraum 6 der Druckzerstäuberdüse 1, wie dies oben bereits geschildert worden ist.

Vorzugsweise ist zwischen der Membran 23 und der zweiten Feder 25 ein metallischer Zwischenring 33 angeordnet, der den Druck der zweiten Feder 25 auf den Rand der Membran 23 gleichmässiger verteilt und damit den Sitz der Membran 23 im Ventil und die Dichtwirkung bezüglich des Federraums 29 verbessert. Ebenfalls vorzugsweise weist der Druckbolzen 22 einen im Durchmesser vergrösserten konvex gerundeten Kopf auf, der beim Zurückdrücken des Druckbolzens 22 in Oeffnungsrichtung des Ventils auf einem in der Ventilschraube 18 eingelassenen Absatz aufliegt und damit den Verschiebungsweg des Druckbolzens 22, d.h. das Ventilspiel, begrenzt.

Die vorangemeldete Druckzerstäuberdüse mit Düsenabschlussventil gemäss der Fig. 1 und 2 bringt aufgrund ihres Aufbaus wesentliche Vorteile gegenüber dem bekannten Stand der Technik. Der Einsatzbereich des Düsenabschlussventils 14 wird allerdings dadurch eingeschränkt, dass das Ventil mit dem aus dem Ventilgehäuse 19 herausragenden Teil der Ventilschraube 18 in das Sackloch 10 des Kegeleinsatzes 8 weit hineinragt. Hierdurch wird von dem Ventil zusätzlicher Platz beansprucht, der zu entsprechenden Einschränkungen bei der Ausgestaltung des Kegeleinsatzes 8 führt.

Weiterhin ist in der eingangs genannten FR-A-1 577 740 ein Düsenabschlussventil für einen Oelzerstäuber offenbart (Fig. 1 und 2), bei dem der eingangsseitig angeordnete Federraum 14 durch eine Membran 12 von der Durchgangskammer 2 abgeteilt wird. Diese Membran 12 kann aus einem Metallblech oder einem Elastomer ausgebildet sein (Seite 4, Zeilen 1-10). In jedem Fall ist die Membran aber mit ihrem umlaufenden Rand 13 in eine im Ventilkörper 1 angeordnete Hinterdrehung eingesetzt bzw. eingeschnappt. Eine solche Lagerung der Membran ist nicht nur im Hinblick auf die Abdichtung des Federraumes problematisch, sondern auch sowohl im Bezug auf die Herstellung des Ventilkörpers 1 als auch im Bezug auf die Montage bzw. ein mögliches Auswechseln der Membran mit erheblichen Schwierigkeiten verbunden.

### DARSTELLUNG DER ERFINDUNG

Es ist daher Aufgabe der Erfindung, ein Ventil zu schaffen, welches einerseits wie das vorangemeldete Ventil leicht und mit einer reproduzierbaren Ventilcharakteristik herstellbar ist, die gewünschte Hysterese in der Ventilcharakteristik zeigt, nur geringe schädliche Volumina aufweist, in denen sich nachtropfendes Oel sammeln kann, und welches sich andererseits durch einen deutlich verringerten Platzbedarf auszeichnet, eine gute Dichtigkeit aufweist und sich leicht montieren und demontieren lässt.

Die Aufgabe wird durch die Gesamtheit der Merkmale des Anspruchs 1 gelöst.

Die (elastische) Membran führt im Zusammenspiel mit dem (metallischen) Ventilsitz zu einer ausgezeichneten Dichtigkeit des Ventils. Die Kombination aus Membran und linearer Feder erzeugt aus folgendem Grund die gewünschte Hysterese: Der Membransitz, d.h., der Randbereich, auf welchem die Membran aufliegt, umschliesst eine deutlich grössere Fläche als der Ventilsitz, gegen den die Membran durch die erste Feder dichtend gepresst wird. Solange das Ventil geschlossen ist, wirkt der Oeldruck auf die kleinere, den Ventilsitz umschliessende Fläche der Membran. Oeffnet das Ventil, wirkt der Druck auf eine grössere, den Bereich innerhalb des Ventilsitzes mitumfassende Fläche der Membran. Damit wirkt auf die erste Feder eine im Verhältnis der beiden Flächen höhere Kraft, so dass die Membran mit einem geringeren Druck in der Oeffnungsstellung gehalten werden kann. Die Ausbildung des Federraums als eines durch die Membran abgeschlossenen Raumes sorgt dafür, dass der Federraum nur mit einem kompressiblen Medium gefüllt ist, nicht jedoch mit Oel, welches nach dem Schliessen des Ventils noch aus der Düse austreten könnte. Die Anordnung des Federraums mit der ersten Feder auf der Einlassseite, die durch eine gegenüber dem vorangemeldeten Ventil umgedrehte Strömungsrichtung ermöglicht wird, verkürzt die Länge des Ventils massgeblich, so dass bei unveränderten Aussenabmessungen der Druckzerstäuberdüse mehr Platz zur Ausbildung des Kegeleinsatzes oder anderer Vorrichtungen verbleibt.

Das erfindungsgemässe Ventil zeichnet sich insbesondere dadurch aus, dass die Oeffnung des Federraumes durch einen umlaufenden Membransitz berandet wird, auf welchem die Membran mit ihrem rückseitigen Randbereich aufliegt, und dass die Membran mittels einer zweiten Feder gegen den Membransitz gepresst wird. Hierdurch wird erreicht, dass selbst bei gewissen unvermeidlichen Toleranzen der Membran und des Membransitzes eine sichere Abdichtung gewährleistet ist. Zur Vergleichmässigung des Druckes der zweiten Feder auf die Membran kann gemäss einer bevorzugten Weiterbildung zwischen der Membran und der zweiten Feder ein Zwischenring, vorzugsweise aus Metall, angeordnet sein.

Eine bevorzugte Ausführungsform des Ventils nach der Erfindung zeichnet sich dadurch aus, dass die erste Feder als Spiralfeder ausgebildet ist und auf einen Druckbolzen einwirkt, welcher seinerseits mit einer Stirnseite auf die Membran Druck ausübt, und dass die Stirnseite des Druckbolzens konvex geformt ist. Die Spiralfeder kann auf einfache Weise mit einer sehr genauen Federcharakteristik hergestellt werden. Der Druckbolzen mit seiner konvexen Stirnseite leitet die Federkraft flächig in die Membran ein und vermeidet punktuelle Belastungen, die zu einer Beschädigungen der Membran führen könnten.

Eine weitere bevorzugte Ausführungsform des erfindungsgemässen Ventils zeichnet sich dadurch aus, dass das Düsenabschlussventil aus im wesentlichen rotationssymmetrischen und zu einer Ventilachse konzentrisch angeordneten Einzelelementen zusammengesetzt ist, die Einzelelemente ein zylinderringförmiges Ventilgehäuse umfassen, welches auf der einen Seite durch das fest aufgesetzte Filter abgeschlossen ist, in das Ventilgehäuse ein Innenteil eingesetzt ist, welches den Einlasskanal als seitliche Ausnehmung enthält, sich eingangsseitig am Filter abstützt und den Federraum und den daran anschliessenden Membransitz enthält, in das Ventilgehäuse eine Ventilschraube eingeschraubt ist, welche den Auslasskanal als zentrale Bohrung enthält, eingangsseitig mit dem Ventilsitz ausgestattet ist, und im eingeschraubten Zustand das Innenteil im Ventilgehäuse fixiert, und das Ventilgehäuse ein Aussengewinde aufweist, mit welchem es in die Druckzerstäuberdüse eingeschraubt werden kann. Durch diese Art des Aufbaus lässt sich das Ventil leicht zusammensetzen und warten sowie leicht in die Düse ein- und ausbauen.

Die erfindungsgemässe Druckzerstäuberdüse für einen Oelbrenner, welche Druckzerstäuberdüse ein Düsengehäuse aufweist, das einen Innenraum in Form eines Sackloches umschliesst, welcher Innenraum im Bodenbereich des Sackloches durch eine Düsenbohrung mit dem Aussenraum in Verbindung steht, ist dadurch gekennzeichnet, dass in den Innenraum ein Düsenabschlussventil nach der Erfindung eingesetzt ist.

Gemäss einer bevorzugten Ausführungsform ist das Düsenabschlussventil in das Düsengehäuse eingeschraubt und gegenüber dem Düsengehäuse mit einem zweiten O-Ring abgedichtet.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im teilweisen Längsschnitt den Einbau eines beispielhaften Ventils gemäss der älteren Europäischen Patentanmeldung Nr. 96810122.0 in eine Druckzerstäuberdüse;
- Fig. 2: im Längsschnitt den inneren Aufbau des Ventils nach Fig. 1;
- Fig. 3: in einer zu Fig. 1 vergleichbaren Darstellung den Einbau eines beispielhaften Ventils nach der vorliegenden Erfindung in eine Druckzerstäuberdüse; und
- Fig. 4: im Längsschnitt den inneren Aufbau des Ventils nach Fig. 3.

### WEGE ZUR AUSFÜHRUNG DER ERFINDUNG

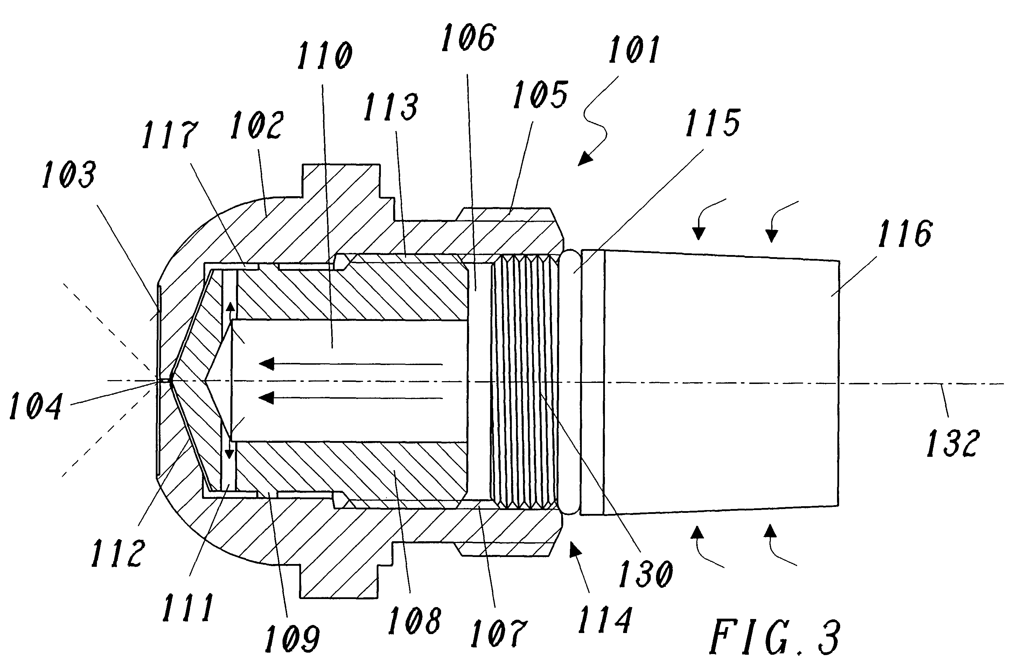

In Fig. 3 ist ein bevorzugtes Ausführungsbeispiel einer Druckzerstäuberdüse mit eingebautem Düsenabschlussventil nach der Erfindung für einen Oelbrenner wiedergegeben. Die Druckzerstäuberdüse 101 hat im wesentlichen denselben Aufbau wie die im Zusammenhang mit Fig. 1 beschriebene Düse und besteht im wesentlichen aus einem Düsengehäuse 102 mit einem sacklochartigen Innenraum 106. Das Düsengehäuse 102 ist auf der Austrittsseite abgeflacht mit einer Düsenfläche 103, in deren Mitte sich eine Düsenbohrung 104 befindet. Die Düsenbohrung, aus der das Oel mit einem Druck von mehreren bar austritt, verbindet den Innenraum 106 der Düse mit dem Aussenraum. In den Innenraum 106 ist ein zylindrischer Kegeleinsatz 108 eingesetzt, der mit seiner kegelförmigen Spitze an den hohlkegelförmigen Boden des Innenraums 106 angepasst ist. Unterhalb der kegelförmigen Spitze ist der Kegeleinsatz 108 im Aussendurchmesser reduziert bis auf einen schmalen, ringförmig umlaufenden Wulst 109, der im Aussendurchmesser dem Innendurchmesser des Innenraums 106 angepasst ist und die Funktion einer Art von Filter übernimmt, um zu verhindern, dass Späne zur Düsenöffnung gelangen. Aufgrund des reduzierten Durchmessers bildet sich zwischen dem Kegeleinsatz 108 und der Wand des Innenraums 106 im Vorderteil der Düse ein ringförmiger Ueberströmraum 117, der über Drallnute 112, die auf der Kegelspitze des Kegeleinsatzes 108 eingearbeitet sind, mit der Düsenbohrung in Verbindung steht.

Der Kegeleinsatz 108 kann im Inneren ein Sackloch 110 aufweisen, welches vom hinteren (rechten) Ende ausgehend bis in den Bereich der Kegelspitze reicht und durch einen oder mehrere Auslasskanäle 111 mit dem Ueberströmraum 117 verbunden ist. Anstelle des Sacklochs 110 kann jedoch das Innere des Kegeleinsatzes andere Einbauten aufweisen. Der Kegeleinsatz 108 trägt am hinteren (rechten) Ende ein Aussengewinde 113, mittels dessen er in ein entsprechendes Innengewinde 107 im Innenraum 106 eingeschraubt werden kann. In Strömungsrichtung vor dem Kegeleinsatz ist das Düsenabschlussventil 114 nach der Erfindung angeordnet. Das in der Seitenansicht gezeigte Düsenabschlussventil 14 ist mittels eines Aussengewindes 130 ebenfalls in das Düsengehäuse 102 eingeschraubt und gegen das Gehäuse mit einem O-Ring 115 abgedichtet. Das Düsenabschlussventil 114 ist eingangsseitig mit einem Filter 116 verbunden, welches vorzugsweise aus Sintermetall besteht. Im Unterschied zu Fig. 1 ragt das Düsenabschlussventil 114 nicht mit einem zapfenartigen Fortsatz in das Sackloch 110 des Kegeleinsatzes 108 hinein, sondern endet vor der Eingangsseite des Kegeleinsatzes 108. Damit steht der gesamte Innenraum des Kegeleinsatzes 108 bzw. der Innenraum 106 im Düsengehäuse 102 frei zur Verfügung.

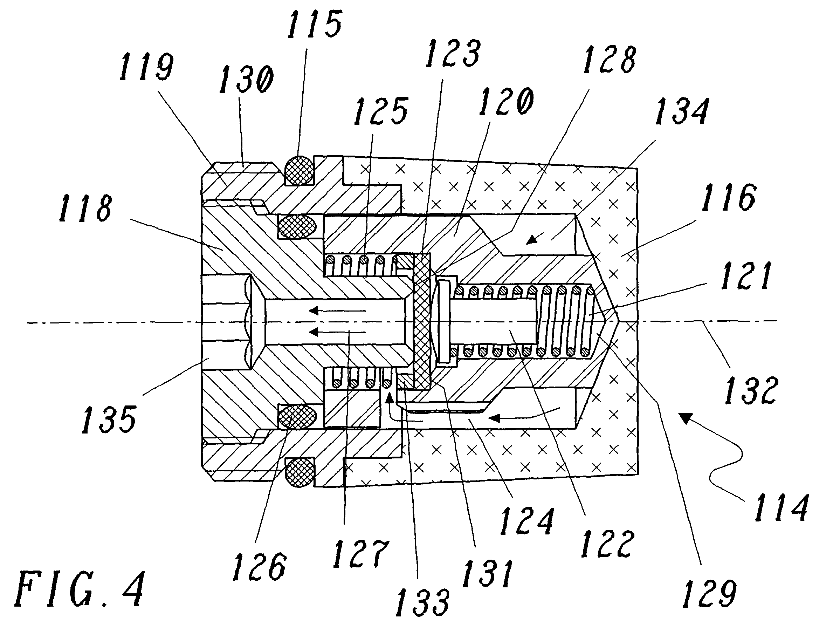

Der innere Aufbau des beispielhaften Düsenabschlussventils 114 aus Fig. 3 ist im Längsschnitt in Fig. 4 wiedergegeben: Das Düsenabschlussventil 114 ist aus im wesentlichen rotationssymmetrischen und zu einer Ventilachse 132 konzentrisch angeordneten Einzelelementen 116, 118, 119, 120, 122, 123 zusammengesetzt. Die Einzelelemente umfassen u.a. ein zylinderringförmiges Ventilgehäuse 119, welches auf der einen Seite durch das fest aufgesetzte (z.B. aufgepresste) Filter 116 abgeschlossen ist. In das Ventilgehäuse 119 ist ein Innenteil 120 eingesetzt, welches mit einer verjüngten Spitze innerhalb des Filters einen Einströmraum 134 bildet und seitlich einen Einlasskanal 124 in Form einer Ausnehmung enthält. Das Innenteil 120 stützt sich eingangsseitig am Filter 116 ab und enthält einen Federraum 129 und einen daran anschliessenden Membransitz 131, welcher eine Membran 123 aufnimmt und hält.

In das Ventilgehäuse 119 ist weiterhin eine Ventilschraube 118 eingeschraubt, welche einen zentralen Auslasskanal 127 und einen am Anfang des Auslasskanals angeordneten Ventilsitz 128 aufweist. Im eingeschraubten Zustand fixiert die Ventilschraube 118 das Innenteil 120 im Ventilgehäuse 119. Zum Zwecke des Einschraubens ist am ausgangsseitigen Ende des Auslasskanals 127 ein Innensechskant 135 angebracht. Es ist im Rahmen der Erfindung aber ebensogut denkbar, dass das Teil 118 nicht als Ventilschraube eingeschraubt, sondern als Einpressteil eingepresst oder anderweitig im Ventilgehäuse befestigt wird. Das Ventilgehäuse 119 weist - wie bereits oben erwähnt - ein Aussengewinde 130 auf, mit welchem es in die Druckzerstäuberdüse 101 eingeschraubt werden kann.

Das Absperrorgan des Düsenabschlussventils 114 ist als Membran 123 ausgebildet. Die (elastische) Membran 123, die in den Membransitz 131 eingelegt ist, wird mittels einer auf der Einlassseite des Ventils vor der Membran 123 angeordneten ersten Feder 121 dichtend auf den Ventilsitz 128 gedrückt. Sie hebt gegen die Kraft der ersten Feder 121 nur vom Ventilsitz 128 ab, wenn ein vorbestimmter Druck, der Oeffnungsdruck, im Einlasskanal 124 erreicht wird. Die erste Feder 121 ist vorzugsweise als Spiralfeder ausgebildet. Sie besitzt eine im wesentlichen lineare Federcharakteristik. Sie wirkt auf einen Druckbolzen 122 ein, welcher seinerseits mit einer konvex geformten Stirnseite auf die Membran 123 Druck ausübt.

Die erste Feder 121 ist nicht auf der Auslassseite, sondern auf der Einlassseite des Ventils in dem Federraum 129 untergebracht. Hierdurch entfällt vorteilhafterweise ein nach links herausstehender Teil, wie er in der Anordnung nach Fig. 2 vorhanden ist. Der Federraum 129 ist als einseitig offener Raum (Sackloch) ausgebildet, dessen einzige Oeffnung durch die Membran 123 dichtend verschlossen wird. Der Federraum 129 enthält ein kompressibles Medium, das beim Oeffnen des Ventils durch die sich verformende Membran 123 leicht komprimiert werden kann. Aufgrund seiner Abgeschlossenheit kann während des Betriebes in ihn kein Oel eindringen, so dass er im Hinblick auf das Nachtropfen kein schädliches Volumen darstellt. Die Membran 123 liegt mit ihrem vorderseitigen Randbereich auf dem Membransitz 131 auf und wird mittels einer auf der Auslassseite angeordneten zweiten Feder 125, vorzugsweise ebenfalls einer Spiralfeder, gegen den Membransitz 131 gepresst. Hierdurch ist gewährleistet, dass die Membran 123 stets dichtend auf dem Membransitz 131 aufliegt. Die zweite Feder 125 ist in einem ringförmigen Hohlraum untergebracht, der zwischen dem vorderen (linken) Teil der Innenteils 120 und dem hinteren (rechten) Teil der Ventilschraube 118 gebildet wird. Wie ein Vergleich zwischen den Fig. 2 und 4 zeigt, sind in beiden Ventilen die Federn 21, 25 bzw. 121, 125, die Druckbolzen 22 bzw. 122, Membran und Membransitz 23, 31 bzw. 123, 131 um 180° gedreht angeordnet. Die Ventilschraube 18 in Fig. 2 wird dabei zum Innenteil 120 in Fig. 4, das Innenteil 20 zur Ventilschraube 118.

In Strömungsrichtung vor der Membran 123 führt seitlich ein Einlasskanal 124 vom Einströmraum 134 zum den Ventilsitz 128 aussen umgebenden Raum, der zugleich die zweite Feder 125 aufnimmt. Die Ventilschraube 118 ist gegen das Ventilgehäuse 119 mit einem weiteren O-Ring 126 abgedichtet. Das Oel tritt, von der rechten Seite kommend, durch den Filter 116 in den Einströmraum 134 ein und von dort durch den Einlasskanal 124 in den Aussenraum des Ventilsitzes 128. Es drückt von dort auf die Membran 123, und zwar auf einer Fläche, die nach aussen vom Membransitz 131 und nach innen von dem Ventilsitz 128 berandet wird.

Mit steigendem Druck biegt sich die Membran 123 nach rechts durch und drückt den Druckbolzen 122 nach rechts und die erste Feder 121 zusammen. Ist der Oeffnungsdruck, z.B. 5-7 bar, erreicht, hebt die Membran 123 vom Ventilsitz 128 ab, so dass das Oel den zentralen Raum des Auslasskanals 127 erfüllen kann. Das Oel drückt nun auf einer grösseren Fläche, die nur noch von dem Membransitz 131 aussen berandet wird, auf die Membran, so dass ein geringerer Druck ausreicht, um dieselbe Federkraft der ersten Feder 121 zu kompensieren. Damit ist der Oeldruck, welcher das Düsenabschlussventil 114 offen hält, deutlich geringer als der Oeffnungsdruck. Das Oel strömt bei abgehobener Membran 123 dann durch den Auslasskanal 127 in den Innenraum 106 der Druckzerstäuberdüse 101, wie dies oben bereits geschildert worden ist. Die erreichbare Hysterese ist dabei in etwa dieselbe, wie sie mit einer Anordnung nach Fig. 2 erzielt werden kann.

Das Düsenabschlussventil 114 nach der Erfindung bildet somit insgesamt eine besonders kompakte, leicht zerlegbare Einheit, die auf einfache Weise zusammengebaut und gewartet werden kann. Der Einbau kann mit geringen Anpassungen bei allen herkömmlichen Düsen erfolgen, so dass auch vorhandene Düsen leicht nachgerüstet werden können. Die gewünschte Ventilcharakteristik lässt sich mittels der Spiralfeder auf unkritische Weise reproduzierbar realisieren. Als Werkstoffe können herkömmliche Materialien eingesetzt werden, wobei im Hinblick auf die Membran auf die nötige Druckfestigkeit und Unempfindlichkeit gegen Oel geachtet werden muss.

### BEZEICHNUNGSLISTE

- 1,101: Druckzerstäuberdüse
- 2,102: Düsengehäuse
- 3,103: Düsenfläche
- 4,104: Düsenbohrung
- 5,105: Aussengewinde (Düse)
- 6,106: Innenraum (Düse)
- 7,107: Innengewinde (Düse)
- 8,108: Kegeleinsatz
- 9,109: Wulst
- 10,110: Sackloch (Kegeleinsatz)
- 11,111: Auslasskanal
- 12,112: Drallnute
- 13,113: Aussengewinde (Kegeleinsatz)
- 14,114: Düsenabschlussventil
- 15,26: O-Ring
- 16,116: Filter (Sintermetall)
- 17,117: Ueberströmraum
- 18,118: Ventilschraube
- 19,119: Ventilgehäuse
- 20,120: Innenteil
- 21,25: Feder
- 22,122: Druckbolzen
- 23,123: Membran
- 24: Auslass
- 27: Einlasskanal
- 28,128: Ventilsitz
- 29,129: Federraum
- 30,130: Aussengewinde (Ventilgehäuse)
- 31,131: Membransitz
- 32,132: Ventilachse
- 33,133: Zwischenring
- 115,126: O-Ring
- 121,125: Feder
- 124: Einlasskanal
- 127: Auslasskanal
- 134: Einströmraum
- 135: Innensechskant

## Patentansprüche

1. Düsenabschlussventil (114) für die Druckzerstäuberdüse (101) eines Oelbrenners, umfassend
eine Einlassseite (124, 134) mit einem Einlasskanal (124), eine Auslassseite (118, 127) mit einem Auslasskanal (127), und einen zwischen dem Einlasskanal (124) und dem Auslasskanal (127) angeordneten Ventilsitz (128),
sowie ein Absperrorgan (123), welches mittels einer hinter dem Absperrorgan (123) angeordneten ersten Feder (121) dichtend auf den Ventilsitz (128) gedrückt wird, und gegen die Kraft der ersten Feder (121) vom Ventilsitz (128) abhebt, wenn ein vorbestimmter Druck im Einlasskanal (124) erreicht wird,
wobei die erste Feder (121) in einem auf der Einlassseite (124, 134) des Düsenabschlussventils (114) angeordneten Federraum (129) untergebracht ist und eine im wesentlichen lineare Federcharakteristik aufweist, und wobei das Absperrorgan als Membran (123) ausgebildet ist, und
der Federraum (129) als einseitig offener Raum ausgebildet ist, dessen einzige Oeffnung durch die Membran (123) dichtend verschlossen wird, wobei die Oeffnung des Federraumes (129) durch einen umlaufenden Membransitz (131) berandet wird, auf welchem die Membran (123) mit ihrem rückseitigen Randbereich aufliegt,
dadurch gekennzeichnet, dass
eine zweite Feder (125) vohanden ist, mittels derer die Membran (123) gegen den Membransitz (131) gepresst wird.

2. Düsenabschlussventil nach Anspruch 1, dadurch gekennzeichnet, dass zwischen der Membran (123) und der zweiten Feder (125) ein Zwischenring (133), vorzugsweise aus Metall, angeordnet ist.

3. Düsenabschlussventil nach einem der Ansprüche 1 und 2, dadurch gekennzeichnet, dass die erste Feder (121) als Spiralfeder ausgebildet ist und auf einen Druckbolzen (122) einwirkt, welcher seinerseits mit einer Stirnseite auf die Membran (123) Druck ausübt.

4. Düsenabschlussventil nach Anspruch 3, dadurch gekennzeichnet, dass die Stirnseite des Druckbolzens (122) konvex geformt ist.

5. Düsenabschlussventil nach einem der Ansprüche 3 und 4, dadurch gekennzeichnet, dass der Verschiebungsweg des Druckbolzens (122) in Oeffnungsrichtung des Ventils begrenzt ist.

6. Düsenabschlussventil nach einem der Ansprüche 1 bis 5, dadurch gekennzeichnet, dass auf der Einlassseite (124, 134) ein Filter (116), vorzugsweise aus einem Sintermetall, angeordnet ist.

7. Düsenabschlussventil nach Anspruch 6, dadurch gekennzeichnet, dass
das Düsenabschlussventil (114) aus im wesentlichen rotationssymmetrischen und zu einer Ventilachse (132) konzentrisch angeordneten Einzelelementen (116, 118, 119, 120, 122, 123) zusammengesetzt ist,
die Einzelelemente ein zylinderringförmiges Ventilgehäuse (119) umfassen, welches auf der einen Seite durch das fest aufgesetzte Filter (116) abgeschlossen ist,
in das Ventilgehäuse (119) ein Innenteil (120) eingesetzt ist, welches den Einlasskanal (124) als seitliche Ausnehmung enthält, sich eingangsseitig am Filter (116) abstützt und den Federraum (129) und den daran anschliessenden Membransitz (131) enthält,
in das Ventilgehäuse (119) eine Ventilschraube (118) eingeschraubt ist, welche den Auslasskanal (127) als zentrale Bohrung enthält, eingangsseitig mit dem Ventilsitz (128) ausgestattet ist, und im eingeschraubten Zustand das Innenteil (120) im Ventilgehäuse (119) fixiert, und
das Ventilgehäuse (119) ein Aussengewinde (130) aufweist, mit welchem es in die Druckzerstäuberdüse (101) eingeschraubt werden kann.

8. Düsenabschlussventil nach Anspruch 7, dadurch gekennzeichnet, dass die Vebtilschraube (118) gegenüber dem Ventilgehäuse (119) durch einen ersten O-Ring (126) abgedichtet ist.

9. Druckzerstäuberdüse (101) für einen Oelbrenner, welche Druckzerstäuberdüse (101) ein Düsengehäuse (102) aufweist, das einen Innenraum (106) in Form eines Sackloches umschliesst, welcher Innenraum (106) im Bodenbereich des Sackloches durch eine Düsenbohrung (104) mit dem Aussenraum in Verbindung steht, dadurch gekennzeichnet, dass in den Innenraum (106) ein Düsenabschlussventil (114) nach einem der Ansprüche 1 bis 8 eingesetzt ist.

10. Druckzerstäuberdüse nach Anspruch 9, dadurch gekennzeichnet, dass das Düsenabschlussventil (114) in das Düsengehäuse (102) eingeschraubt ist und gegenüber dem Düsengehäuse (102) mit einem zweiten O-Ring (115) abgedichtet ist.

11. Druckzerstäuberdüse nach einem der Ansprüche 9 und 10, dadurch gekennzeichnet, dass zwischen dem Düsenabschlussventil (114) und der Düsenbohrung (104) im Innenraum (106) des Düsengehäuses (102) ein Kegeleinsatz (108) angeordnet ist.

## Claims

1. A nozzle end valve (114) for the pressure spray nozzle (101) of an oil burner, comprising
an intake side (124, 134) with an intake duct (124), an outlet side (118, 127) with an outlet duct (127), and a valve seat (128) positioned between the intake duct (124) and the outlet duct (127),
as well as a locking unit (123) which is sealably pushed onto the valve seat (128) by means of a first spring (121) positioned behind the locking unit (123), and lifts from the valve seat (128) against the force of the first spring (121), when a predetermined pressure is reached in the intake duct (124),
wherein the first spring (121) is housed in a spring chamber (129) positioned on the intake side (124, 134) of the nozzle end valve (114) and exhibits a substantially linear spring characteristic, and wherein the locking unit is formed as a membrane (123), and
the spring chamber (129) is formed as an open chamber on one side, the single aperture is sealably closed by the membrane (123), wherein the aperture of the spring chamber (129) is bordered by a peripheral membrane seat (131) on which lies the membrane (123) with its border area on its rear side,
characterized in that
a second spring (125) is present, by means of which the membrane (123) is pressed against the membrane seat (131).

2. The nozzle end valve according to claim 1, characterized in that an intermediate ring (133) preferably in metal is positioned between the membrane (123) and the second spring (125).

3. The nozzle end valve according to any of claims 1 and 2, characterized in that the first spring (121) is formed as a coil spring and acts on a thrust pin (122), which in turn exerts pressure on a front face of the membrane (123).

4. The nozzle end valve according to claim 3, characterized in that the front face of the thrust pin (122) has a convex shape.

5. The nozzle end valve according to any of claims 3 and 4, characterized in that the displacement stroke of the thrust pin (122) is limited in the direction of opening of the valve.

6. The nozzle end valve according to any of claims 1 to 5, characterized in that a filter (116), preferably in sintered metal, is positioned on the intake side (124, 134).

7. The nozzle end valve according to claim 6, characterized in that,
the nozzle end valve (114) is composed of essentially rotationally symmetrical individual elements (116, 118, 119, 120, 122, 123) positioned concentrically with respect to a valve axis (132),
the individual elements comprise a cylinder ring shaped valve housing (119), which is terminated by the securely mounted filter (116) on one side,
an inner part (120) is inserted in the valve housing (119), which contains the intake duct (124) as a side recess, is supported against the filter (116) on the input side and contains the spring chamber (129) and the membrane seat (131) joined to it,
a valve screw (118) is screwed into the valve housing (119), which contains the outlet duct (127) as a central bore, is provided with the valve seat (128) on the input side and fixes the inner part (120) in the screwed condition in the valve housing (119), and
the valve housing (119) comprises an external thread (130), with which it may be screwed into the pressure spray nozzle (101).

8. The nozzle end valve according to claim 7, characterized in that the valve screw (118) is sealed off by a first O-ring (126) with respect to the valve housing (119).

9. A pressure spray nozzle (101) for an oil burner, which pressure spray nozzle (101) comprises a nozzle housing (102), which encloses an inner chamber (106) in the form of a blind hole, which inner chamber (106) is in communication with the external chamber in the bottom area of the blind hole through a nozzle bore (104), characterized in that a nozzle end valve (114) according to any of claims 1 to 8 is inserted into the inner chamber (106).

10. The pressure spray nozzle according to claim 9, characterized in that the nozzle end valve (114) is screwed into the nozzle housing (102) and is sealed off with a second O-ring (115) with respect to the nozzle housing (102).

11. The pressure spray nozzle according to any of claims 9 and 10, characterized in that a conical insert (108) is positioned in the inner chamber (106) of the nozzle housing (102) between the nozzle end valve (114) and the nozzle bore (104).

## Revendications

1. Soupape terminale de buse (114) pour la buse de pulvérisateur sous pression (101) d'un brûleur à mazout, comprenant
un côté admission (124, 134) avec un canal d'admission (124) et un côté échappement (118, 127) avec un canal d'échappement (127) et un siège de soupape (128) disposé entre le canal d'admission (124) et le canal d'échappement (127),
ainsi qu'un organe de fermeture (123), qui est comprimé hermétiquement sur le siège de soupape (128) au moyen d'un premier ressort (121) disposé derrière l'organe de fermeture (123), et qui se soulève du siège de soupape (128) en contrant la force du premier ressort (121), lorsqu'une pression prédéterminée est atteinte dans le canal d'admission (124),
dans laquelle le premier ressort (121) est logé dans une chambre de ressort (129) disposé du côté admission (124, 134) et présente une caractéristique de ressort essentiellement linéaire et l'organe de fermeture est formé en tant que diaphragme (123), et
la chambre à ressort (129) est formée en tant que chambre ouverte d'un côté, dont l'unique ouverture est fermé hermétiquement par le diaphragme (123), l'ouverture de la chambre à ressort (129) étant bordée par un siège de diaphragme périphérique (131) sur lequel repose le diaphragme (123) avec sa zone marginale arrière,
caractérisée en ce que,
un deuxième ressort (125) est présent au moyen duquel le diaphragme (123) est pressé contre le siège de diaphragme (131).

2. Soupape terminale de buse selon la revendication 1, caractérisée en ce qu'une bague intermédiaire (133), de préférence métallique, est disposée entre le diaphragme (123) et le deuxième ressort (125).

3. Soupape terminale de buse selon l'une quelconque des revendications 1 et 2, caractérisée en ce que le premier ressort (121) est formé en tant que ressort hélicoïdal et qu'il agit sur un boulon de pression (122) qui exerce une pression de son côté avec une face frontale sur le diaphragme (123).

4. Soupape terminale de buse selon la revendication 3, caractérisée en ce que la face frontale du boulon de pression (122) a une forme convexe.

5. Soupape terminale de buse selon l'une quelconque des revendications 3 et 4, caractérisée en ce que la course de déplacement du boulon de pression (122) est limitée dans la direction d'ouverture de la soupape.

6. Soupape terminale de buse selon l'une quelconque des revendications 1 à 5, caractérisée en ce qu'un filtre (116), de préférence en métal fritté, est disposé du côté admission (124, 134).

7. Soupape terminale de buse selon la revendication 6, caractérisée en ce que,
la soupape terminale de buse (114) se compose essentiellement d'éléments individuels (116, 118, 119, 120, 122, 123) à symétrie de révolution, disposés de façon coaxiale par rapport à un axe de soupape (132),
les éléments individuels comprennent un logement de soupape (119), qui est fermé par le filtre (116) monté de façon fixe sur un des côtés,
une pièce interne (120) est insérée dans le logement de soupape (119), laquelle contient le canal d'admission (124) sous forme de creux latéral, s'appuie du côté de l'entrée sur le filtre (116) et contient la chambre à ressort (129) et le siège de diaphragme (131) jointe à celle-ci,
une vis de soupape (118) est insérée dans le logement de soupape (119), laquelle contient le canal d'échappement (127) sous forme d'alésage central, est pourvue du siège de soupape (128) du côté de l'entrée, et à l'état vissé, fixe la pièce interne (120) dans le logement de soupape (119), et
le logement de soupape (119) comporte un filetage externe (130), avec lequel il peut être vissé dans la buse de pulvérisateur sous pression (101).

8. Soupape terminale de buse selon la revendication 7, caractérisée en ce que la vis de soupape (118) est rendue étanche vis à vis du logement de soupape (119) par un premier joint torique (126).

9. Buse de pulvérisateur sous pression (101) pour un brûleur à mazout, laquelle buse de pulvérisateur sous pression (101) d'un brûleur à mazout comprend un logement de buse (102) qui renferme une chambre interne (106) sous forme d'un trou borgne, laquelle chambre interne (106) est en communication avec la chambre externe par un alésage de buse (104) dans la zone du fond du trou borgne, caractérisée en ce qu'une soupape terminale de buse (114) selon l'une quelconque des revendications 1 à 8 est insérée dans la chambre interne (106).

10. Buse de pulvérisateur sous pression selon la revendication 9, caractérisée en ce que la soupape terminale de buse (114) est vissée dans le logement de buse (102) et rendue étanche vis à vis du logement de buse (102) par un deuxième joint torique (115).

11. Buse de pulvérisateur sous pression selon l'une quelconque des revendications 9 et 10, caractérisée en ce qu'une pièce rapportée conique (108) est disposée dans la chambre interne (106) entre la soupape terminale de buse (114) et l'alésage de buse (104).
